# EUROPEAN PATENT APPLICATION

(11) **EP 0 584 656 A1**
(43) Date of publication of application: **02.03.1994**
(21) Application number: 93112897.9
(22) Date of filing: 11.08.1993
(51) Int. Cl.: H02M 3/335, G05F 1/613

(54) **Improved switched mode power supply**

(30) Priority: 14.08.1992 US 929224
(71) Applicant: Hughes Aircraft Company, Los Angeles, California 90045-0066 (US)
(72) Inventor: Estes, Jr. Earl M., Tucson, Arizona 85711 (US)
(74) Representative: KUHNEN, WACKER & PARTNER

(57) **Abstract**

The need in the art is addressed by the present invention which provides a simple current controlled switched mode power supply with leading edge blanking, slope compensation and voltage feed forward. The invention includes a pulse width modulator (12) for providing a switch activation signal in response to a slope compensation and voltage feed forward signal. A transformer (T1) converts an input signal from a power source to an output signal. A transistor switch (Q1) allows current to flow in the transformer (T1) in response to the switch activation signal. The slope compensation and voltage feed forward signal is generated in proportion to the output signal and applied to the pulse width modulator. Various embodiments are disclosed for providing the slope compensation and feed forward signal.

## Description

### BACKGROUND OF THE INVENTION

### Field of the Invention:

The present invention relates to power supplies. More specifically, the present invention relates to switched mode power supplies.

While the present invention is described herein with reference to illustrative embodiments for particular applications, it should be understood that the invention is not limited thereto. Those having ordinary skill in the art and access to the teachings provided herein will recognize additional modifications, applications, and embodiments within the scope thereof and additional fields in which the present invention would be of significant utility.

### Description of the Related Art:

Numerous power supplies are known in the art. These include unregulated power supplies as well as regulated power supplies.

Unregulated power supplies provide an output voltage which is proportional to the input voltage. There is no regulation of power per se. Unregulated power supplies are typically implemented with a rectifier, an energy storage element, typically a capacitor, and a filter. Unfortunately, many current applications require regulated power.

Supplies that regulate power include linear power supplies and switched mode power supplies. Linear power supplies typically include a rectifier/filter and some mechanism for providing linear regulation. For example, many linear power supplies provide linear regulation by outputting a lower voltage than is input thereto. Unfortunately, linear power supplies waste much energy and are therefore not efficient.

Switched mode power supplies are currently widely used. Switched mode power supplies efficiently regulate power by switching power to a load in accordance with a duty cycle appropriate for the amount of power required.

There are several topologies of switched mode power converters. Switched mode power supplies are typically DC to DC converters. In a typical power line application, the switched mode power supply would include a power switching circuit capable of regulating on the basis of duty cycle. The conventional DC to DC converter includes a pulse width modulator (PWM) integrated circuit which modulates the pulse width of an output signal as part of a feedback network in accordance with a desired duty cycle. These circuits typically include a metal-oxide field effect transistor (MOSFET), or other transistor type, switch which has an inherent parasitic capacitance. The switch typically controls the flow of current through the primary winding of a transformer. Current through the switch is monitored to provide an analog of the output current. When the switch is turned on, a spike of current appears in the output signal due to the capacitance of the switch and the reverse recovery of the rectifier circuit.

R-C (resistive-capacitive) filters have been employed to mitigate the spike on the leading edges of the current analog feedback signals. However, this adds to the cost and inhibits the performance of the system.

Recently, a pulse width modulator has been introduced by at least one company, the Unitrode Corporation, which features a built-in leading edge blanking capability. Pulse width modulator integrated circuits, which employ leading edge blanking, are employed in current mode controlled switching power supplies. The leading edge blanking feature provides improved integrity of the current monitor analog feedback signal by eliminating the waveform distortion that would be introduced by the alternative use of a leading edge spike suppression R-C filter. Slope compensation and voltage feed forward are required for optimal loop stability and improved dynamic performance, of current mode controlled switching power supplies.

Slope compensation involves the use of an input stimulus to maximize the stability of a feedback loop in a power supply and mitigate gain peaking at one-half the switching frequency which can result in subharmonic oscillation.

Voltage feed forward is employed to cancel ripple in the input voltage, and thus prevent it from appearing in the output voltage.

Prior approaches for providing slope compensation and voltage feed forward were somewhat complicated. The complications were such as to discourage the use of these performance enhancing techniques. One conventional approach, for example, sums a sample of the oscillator sawtooth waveform with a current analog. This provides slope compensation but does not provide voltage feed forward.

Accordingly, there is a need in the art for a simple technique for providing slope compensation and voltage feed forward in a pulse width modulated switching power supply.

### SUMMARY OF THE INVENTION

The need in the art is addressed by the present invention which provides a simple current controlled, switched mode power supply with leading edge blanking, slope compensation and voltage feed forward. The invention includes a pulse width modulator for providing a switch activation signal in response to a slope compensation and voltage feed forward signal. A transformer converts an input signal from a power source to an output signal. A transistor switch allows current to flow in the transformer in response to the switch activation signal. The slope compensation and voltage feed forward input signal is generated in proportion to the output signal and applied to the pulse width modulator. Various embodiments are disclosed for providing the slope compensation and feed forward signal.

### BRIEF DESCRIPTION OF THE DRAWINGS

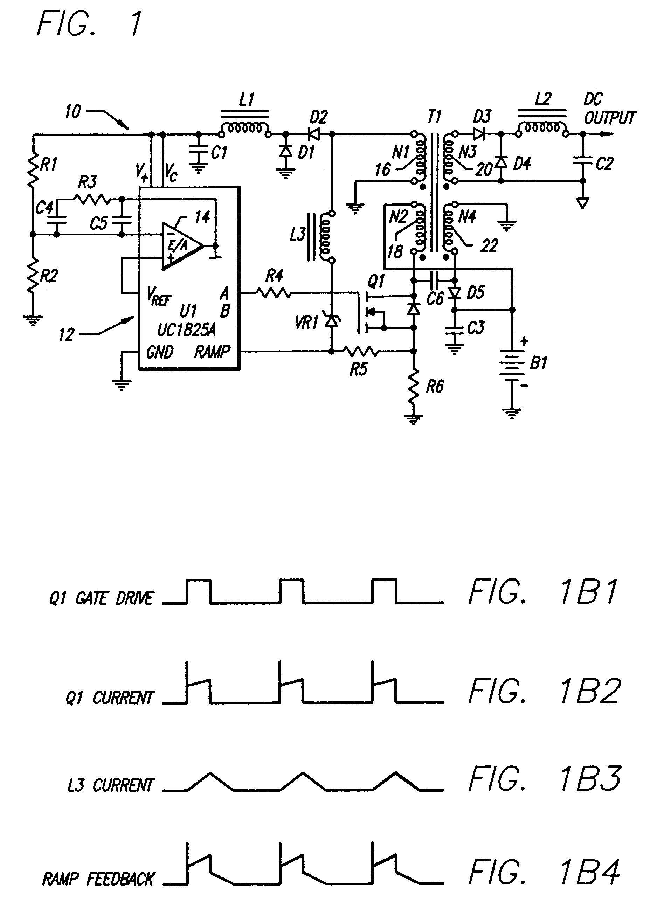

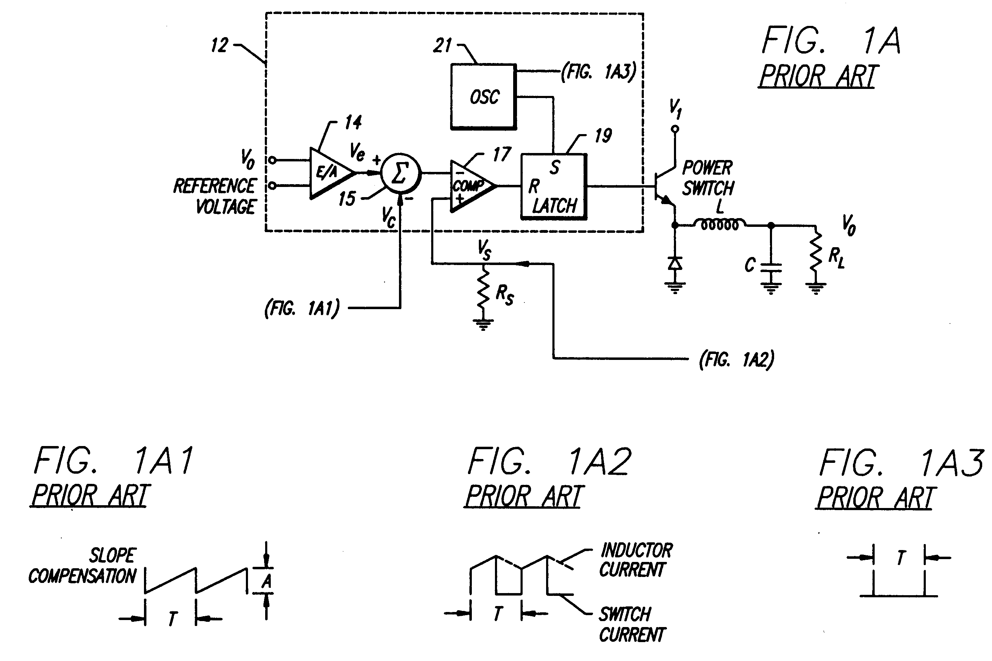

Fig. 1 is a schematic diagram of an illustrative embodiment of the improved switched mode power supply of the present invention.

Fig. 1A is a schematic diagram from a Unitrode Application Note which illustrates the internal composition of a typical conventional pulse width modulator integrated circuit (IC) in an illustrative application.

Fig. 1A1 is a waveform of an illustrative slope compensation signal applied to the typical pulse width modulator.

Fig. 1A2 is a waveform of inductor current and switch current for the pulse width modulator of Fig. 1A.

Fig. 1A3 illustrates the output of the oscillator of the pulse width modulator of Fig. 1A.

Fig. 1B1 depicts the waveform of the switch control voltage applied to the gate of the switch of the improved switched mode power supply of the present invention.

Fig. 1B2 depicts the current through the switch of the improved switched mode power supply of the present invention.

Fig. 1B3 depicts the current through the ramp generating inductor of the illustrative embodiment of the improved switched mode power supply of the present invention.

Fig. 1B4 depicts the voltage applied to the RAMP terminal of the improved switched mode power supply of the present invention.

Fig. 2 is a schematic diagram of a first alternative embodiment of the improved switched mode power supply of the present invention, illustrated in a second forward converter application.

Fig. 3 is a schematic diagram of a second alternative embodiment of the improved switched mode power supply of the present invention, illustrated in a third forward converter application.

Fig. 4 is a schematic diagram of a third alternative embodiment of the improved switched mode power supply of the present invention illustrated in a fourth forward converter application.

Fig. 5 is a schematic diagram of a fourth alternative embodiment of the improved switched mode power supply of the present invention, illustrated in a fifth forward converter application.

Fig. 6 is a schematic diagram of a fifth alternative embodiment of the improved switched mode power supply of the present invention, illustrated in a sixth forward converter application.

Fig. 7 is a schematic diagram of a sixth alternative embodiment of the improved switched mode power supply of the present invention, illustrated in a seventh forward converter application, which differs from the preceding in that it employs an old style pulse width modulator that does not have the leading edge blanking feature.

Fig. 8 is a schematic diagram of a seventh alternative embodiment of the improved switched mode power supply of the present invention, illustrated in a push-pull buck converter application.

### DESCRIPTION OF THE INVENTION

Illustrative embodiments and exemplary applications will now be described with reference to the accompanying drawings to disclose the advantageous teachings of the present invention.

Fig. 1 is a schematic diagram of an illustrative embodiment of the present invention applied to an improved version of the forward converter, which is well known to those skilled in the art to be a subset of the class of switched mode converter commonly known as the buck converter. The invention 10 includes a pulse width modulator (PWM) 12. In the best mode, the PWM 12 has a leading edge blanking capability such as that provided by the model UC1825A sold by the Unitrode Corporation of Lexington, Massachusetts. The PWM 12 has an internal error amplifier 14 with inverting (negative) and noninverting (positive) inputs.

Fig. 1A is a schematic diagram from a Unitrode Application Note which more clearly illustrates in greater detail the internal composition of a typical PWM integrated circuit (IC) in an illustrative application. The error amplifier 14 is shown within the PWM 12 along with a summer 15. An error voltage Vₑ is provided by the error amplifier 14 to the summer 15. In the illustration, the summer 15 subtracts a slope compensation signal V_{C} from the error voltage Vₑ provided by error amplifier 14. The slope compensation signal V_{C} is typically a sawtooth signal such as that shown in Fig. 1A1. In a conventional switched mode power supply, the generation of the slope compensation signal required a somewhat complicated circuit arrangement which served the sole purpose of providing a slope compensation signal. As will be appreciated from the following disclosure, the present invention provides a simple means for generating a slope compensation signal which also serves to provide a voltage feed forward signal.

The output of the summer 15 is one input to a comparator 17. The second input to the comparator 17 is a voltage analog of the output inductor current I_{L} as depicted in Fig. 1A2. (In the application of the present invention, this input to the comparator is labeled "RAMP". The comparator 17 provides reset signals to a latch 19. The set signal is provided by an oscillator 21. The output of the oscillator is illustrated in Fig. 1A3. The output of the PWM is the output of the latch 19 and is provided to a power switch.

Returning to Fig. 1, the output of the PWM 12 is provided at a terminal labeled "A". A jumper is connected between a V_{ref} terminal and the noninverting input of the internal error amplifier 14.

Resistors R1 and R2 are connected in series between ground and an inductor L1. The node between the resistors R1 and R2 is connected to the inverting input of the PWM internal error amplifier 14. A resistor R3 and capacitors C4 and C5 are connected in the feedback loop of the internal error amplifier 14. As is known in the art, resistor R3, capacitors C4 and C5, and resistor R1 provide a lead-lag network, for improved stability, for which R2 sets a DC reference potential.

Supply voltage is provided to the PWM from the node between the resistor R1 and the inductor L1. A capacitor C1 is connected between this node and ground. The second terminal of the inductor L1 is connected to the cathodes of two diodes, D1 and D2. The anode of the diode D1 is connected to ground. The anode of the diode D2 is connected to the first winding 16 of a four winding transformer T1. The second end of the first winding 16 is connected to ground. The inductor L1 and the diode D2 provide a feedback voltage source for the error amplifier 14 of the PWM 12. The capacitor C1 acts as a filter and the diode D1 allows the inductor L1 to continue conducting and thus supply the feedback current during the switch-off periods.

The positive terminal of a battery B1 is connected to one end of the second winding 18 of the transformer T1. The positive terminal of the battery B1 is also grounded through a capacitor C3. The negative terminal of the battery B1 is grounded. The battery B1 is shown for the purpose of illustration only. In application, the battery B1 may be replaced by a rectifier or other prime source of unregulated power as is known in the art.

The second end of the second winding 18 of the transformer T1 is connected to the drain of a MOSFET Q1. The source of the MOSFET Q1 is connected to ground through a resistor R6 (typically 1 ohm or less). The gate of the MOSFET 18 is connected to the output of the PWM 12 via a resistor R4.

The output of the power supply 10 is provided through the third winding 20 of the transformer T1. The first end of the third winding 20 is connected to the anode of a diode D3. The cathode of the diode D3 is connected to the cathode of a diode D4. The anode of the diode D4 is connected to the second end of the third winding 20. The first end of an inductor L2 is connected to the node between the diodes D3 and D4. The output signal is provided by the second end of the inductor L2. A capacitor C2 is connected between the second end of the inductor L2 and the second end of the third winding 20. The second end of the third winding 20 is also connected to a second ground. The inductor L2, the diodes D3 and D4 and the capacitor C2 operate in the same manner as the L1 feedback circuit. As the turns ratio of the first winding 16 to that of the third winding 20 is known, the feedback voltage, developed at the output of the feedback energy-storage inductor L1, is in a known and fixed ratio to the DC output voltage developed via energy-storage inductor L2.

The transformer T1 has a clamped primary. That is, the first end of the fourth winding 22 is connected to ground and the second end of the fourth winding 22 is connected to capacitor C3 through a diode D5. A capacitor C6 links the second end of the second winding 18 with the second end of the fourth winding 22 of the transformer T1. The capacitors C3 and C6 and the diode D5 clamp the peak voltage on the primary to a safe level during the flyback/core-reset interval and recycle the energy stored in the transformer's magnetizing inductance back into the battery circuit. This prior art clamping circuit improves efficiency and reduces heat generation as compared to the commonly used method of dissipating the stored energy in a resistor or zener.

In accordance with the present teachings, a third inductor L3 is connected at one end to the anode of the diode D2. The second end of the inductor L3 is connected to the anode of a zener diode VR1. The cathode of the zener diode VR1 is connected to the RAMP terminal of the PWM integrated circuit (IC) 12. The zener diode may be replaced by a simple diode. The GND terminal on the IC is grounded. A resistor R5 is connected between the cathode of the zener diode VR1 and the source of the MOSFET switch Q1 for the purpose of developing a pedestal signal that is an effective analog of the output inductor current. This pedestal is a trapezoidal voltage waveform as illustrated in Figs. 1B2 and 1A2. The inductor L3 provides a means for generating a sawtooth current waveform which is developed into a sawtooth voltage waveform by the resistor R5. This waveform, when summed with the current analog pedestal signal is, applied to the RAMP terminal of the PWM 12. The RAMP terminal is connected to the comparator (not shown) of the PWM 12 and allows for the input of a current analog, slope compensation and voltage feed forward signal thereto in accordance with the present teachings.

In operation, the PWM applies a voltage to the gate of the transistor Q1, as described above with reference to Fig. 1A. The waveform of the gate voltage is illustrated in Fig. 1B1. When Q1 turns on, current flows from the battery B1 through the primary winding N2 of the transformer T1. This current flows through the drain and source of the transistor Q1 and the resistor R6 to ground. This develops a trapezoidal current waveform to flow in R6 as illustrated in Fig. 1B2 from which a trapezoidal voltage is generated.

When Q1 turns on, its drain voltage drops to near ground potential causing the voltage on the upper terminal of the inductor L3 to rise to a positive voltage that is in direct proportion to the applied battery voltage. This causes the current in L3 to rise smoothly from zero at a rate that is very nearly in direct proportion to the battery voltage as is depicted in Fig. 1B3. This current path is from ground through the transformer secondary, the inductor L3, the zener diode VR1, resistor R5, resistor R6 and return to ground. This sawtooth of current causes a sawtooth of voltage to be summed with the trapezoidal voltage produced by the drain-to-source current flowing in R6. This increases the slope on the combined voltage which is fed to the PWM and effectuates slope compensation as will be appreciated by those skilled in the art. These summed voltages are depicted in Fig. 1B4 and appear at the RAMP input to the PWM 12. A slope compensation sawtooth is summed with the current analog feedback signal. The effect, as viewed at the inputs to the voltage comparator 17 in Fig 1A, is the same, however, as would be realized by the summing of a negative slope compensation sawtooth with the error signal output of the error amplifier as illustrated in Fig. 1A.

As is characteristic of current mode, pulse width modulated, switching power supplies, two distinct control loops are formed. The outer loop, consisting primarily of L1, C1, R1, R3, C4, C5, and the error amplifier 14, responds slowly over a period of many switching cycles, typically 10 to 100. The much faster inner loop responds on a pulse-to-pulse basis to program the current through the output inductor L2 in response to the much slower error amplifier output.

When the switch Q1 turns off, the magnetic flux stored in the magnetizing inductance of transformer T1 causes all the voltages on the terminals of T1 to reverse, and thus the upper terminal of the inductor L3 to be driven negative. The current in L3 is thus caused to diminish to zero at which time VR1 becomes reversed biased. At this time a minute amount of energy is stored in the interwinding capacitance of L3 so that a damped ringing occurs at the self-resonant frequency of this inductor. The zener diode VR1 absorbs part of this minute stored energy to enhance damping. The inductor L3 and the diode VR1 remain dormant for the remainder of the cycle until the switch Q1 turns on again.

When the switch Q1 is turned on, magnetizing current flows in the primary winding N2 and thus stores energy in the magnetizing inductance of transformer T1. When the switch Q1 turns off, the voltages on all terminals of the transformer reverse, as forced by the magnetizing current attempting to find a new path. This core reset current path is from ground through winding N4 of transformer T1, diode D5, and capacitor C3 back to ground. Since C3 is connected in parallel with the battery, it can readily be seen that the stored magnetizing energy is thus recycled with only minimal power loss.

With the voltages on the transformer thus reversed it can readily be seen that diode D2 is reversed biased, and that the conduct ion in the outer loop feedback energy-storage inductor L1 is via diode D2. During this "switch-off" period the current in L1 diminishes to a lower level, since under this switch-off condition, L1 is the source of energy in the feedback circuit. As is typical of this class of forward converters which operate in the "continuous inductor conduction" mode, the current in L1 does not diminish to zero. The feedback voltage, thus developed across capacitor C1, is supplied to the error amplifier 14 via resistor R1, enabling the PWM 12 to regulate the duty cycle of the rectangular voltage applied to the gate of the MOSFET switch Q1.

As previously discussed, the pulse width modulator 12 turns the switch Q1 on in time coincidence with the internally-generated clock signal, and turns it off when the RAMP voltage rises to a level that coincides with the error voltage at the output of error amplifier 14.

Since the voltage applied to the upper end of inductor L3 is proportional to battery voltage and the voltage at its lower end is negligible i.e., much less than the voltage at the upper end, it is apparent that the voltage across L1 is essentially in direct proportion to the battery voltage when the switch is on. It is well known that the rate of change of current in an inductor is in direct proportion the voltage applied between its terminals. From this it is apparent that the rate of rise of current through R5, and therefore the rate of rise of voltage across this resistor is in direct proportion to the battery voltage at any moment. If the "battery" voltage developed across R5 will vary in a sense that controls the duty cycle in a manner that mitigates the effect of the ripple voltage, and this requires little or no compensation by the error voltage. Essentially complete ripple cancellation is possible by the proper choice of component values.

The teaching of this present invention is the simplified methodology employed to generate the RAMP signal that employs a near-optimum combination of switch current analog, slope compensation, and voltage fee-forward.

When the switch Q1 turns on a voltage approximately two to three time the output DC voltage is applied to output energy-storage inductor L2 via diode D3. This causes the current and stored energy in L2 to increase during this switch-on portion of the cycle. When the switch Q1 turns off, the previously-described reversal of voltages on transformer T1 causes diode D3 to be reversed biases. During the switch-off portion of the cycle energy-storage inductor L2 supplies the output current which flows from the output ground via diode D4. During this switch-off portion of the cycle the energy stored in inductor L2 is partially depleted, but in this continuous inductor conduction mode forward converter it is not depleted to zero. It can readily be seen that inductors L1 and L2 and their associated rectifier and filter components and transformer T1 secondaries serve analogous functions for the feedback and output circuits respectively.

The result is an implementation of current mode control, slope compensation, and voltage feed forward to enhance the cost and performance features of a forward converter in a manner that provides optimum utilization of the new class of pulse width modulator IC's that employ leading edge blanking. The invention can also be employed in other switching power converter topologies and in those that employ the old style pulse width modulators that do not feature leading edge blanking. Without leading edge blanking, circuit complexity is increased, and RAMP waveform integrity is compromised.

With these basic teachings, those skilled in the art will recognize many embodiments within the scope of the present invention.

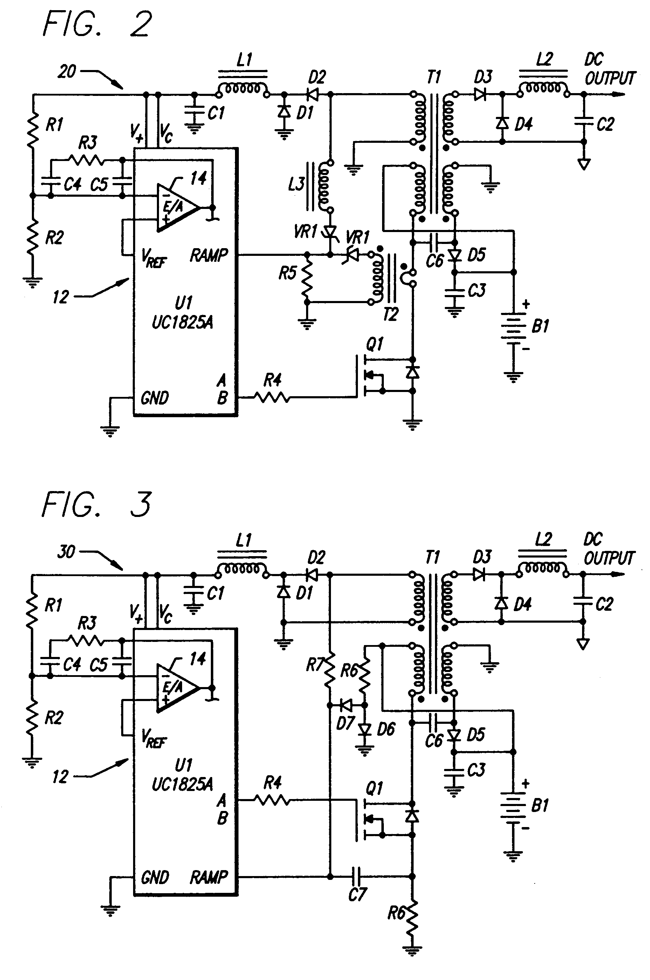

For example, Fig. 2 is a schematic diagram of a first alternative embodiment of the improved switched mode power supply 20 of the present invention. This embodiment is similar to that of Fig. 1 with the exception that the resistor R6 is replaced by a current sense transformer T2, which has a single turn primary and a multi-turn secondary, and a zener diode VR2. The operation of the embodiment of Fig. 2 is the same as that of Fig. 1 except for the method of current sensing employed. The use of T2, VR2, and R5 for current sensing is a conventional practice for use in higher power converters due to the losses that would occur if a current sense resistor, such as R6 is Fig. 1 were employed for current sensing. The current from the secondary of current sense transformer T2 and that through L3 both flow through R5. This produces a voltage across R5 that is proportional to the trapezoidal current in T2 plus the triangular current through L3 and thus forms the aforementioned RAMP signal.

Fig. 3 is a schematic diagram of a second alternative embodiment of the improved switched mode power supply 30 of the present invention.

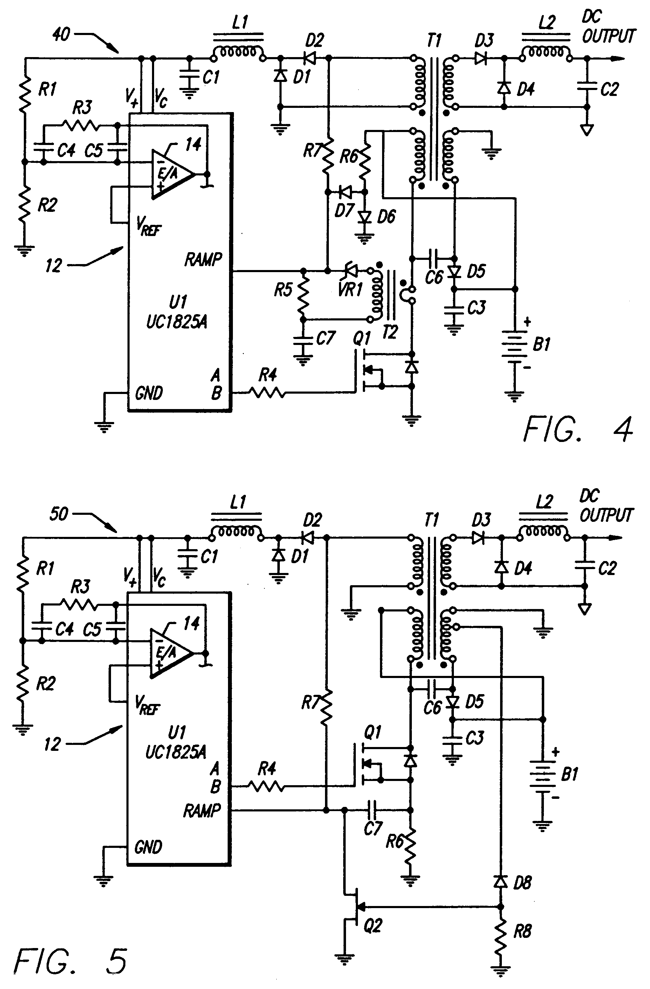

Fig. 4 is a schematic diagram of a third alternative embodiment of the improved switched mode power supply 40 of the present invention.

The power supplies of Figs. 3 and 4 are identical to those of Figs. 1 and 2, respectively, except that the slope compensation/voltage feed forward waveform is generated by an R-C time constant instead of an L-R time constant. In these embodiments, the waveform to be added to the current analog is developed across capacitor C7. In operation, when the switch Q1 conducts causing a positive voltage to be applied to the top end of R7, current flows through R7 causing an essentially linear ramp of voltage to be developed across C7. The voltage applied to the RAMP terminal of the PWM 12 is the sum of the voltages across C7 plus the voltage across the current sense resistor R6 or R5 for Figs. 3 and 4 respectively. The effect is therefore the same as that previously described for the embodiments of Figs. 1 and 2.

During the switch-off period, the voltages on the transformer T1 are reversed causing current to flow in the opposite direction in R7. When the voltage across C7 has been reduced to zero, D7 conducts to prevent a negative voltage from being developed. The diodes D6 and D7 and the resistor R6 thus serve a clamping function analogous to that of the zener diode VR1 in the embodiments of Figs. 1 and 2.

Fig. 5 is a schematic diagram of a fourth alternative embodiment of the improved switched mode power supply 50 of the present invention.

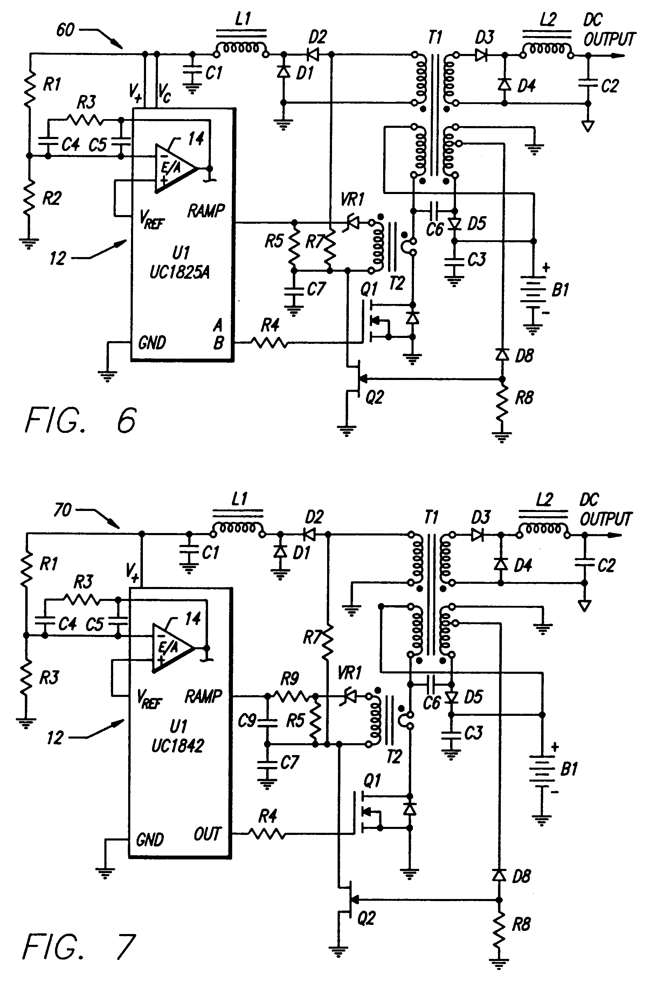

Fig. 6 is a schematic diagram of a fifth alternative embodiment of the improved switched mode power supply 60 of the present invention.

The power supplies of Figs. 5 and 6 are similar to those of Figs. 3 and 4 respectively except that a JFET Q2 and its associated gate drive components diode D8 and resistor R8 are employed as an alternate means to discharge capacitor C7 during the switch-off periods.

Fig. 7 is a schematic diagram of a sixth alternative embodiment of the improved switched mode power supply 70 of the present invention. This embodiment is similar to that of Fig. 6 except that a UC1842 pulse width modulator, which does not have leading edge blanking has been substituted for the UC1825A, employed in the other embodiments. As is common practice, an R-C filter consisting of R9 and C9 is added to the circuit to mitigate the detrimental effects of the aforementioned leading edge current spike. This R-C filter is not taught as part of the present invention, but is shown to illustrate that the summing techniques taught herein can be used with conventional pulse width modulators. Although required with pulse width modulators without leading edge blanking, this R-C filter degrades the integrity of the RAMP signal.

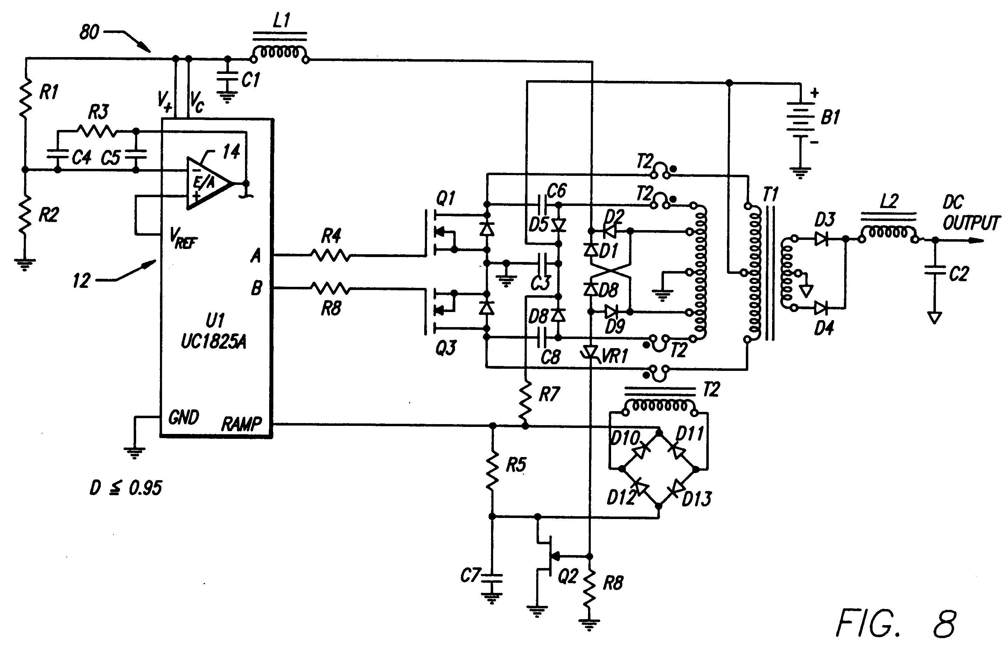

Fig. 8 is a schematic diagram of a seventh alternative embodiment of the improved switched mode power supply 80 of the present invention. This embodiment teaches the use of the present invention in a push-pull, current mode, buck converter that operates with continuous inductor conduction. As is well known in the art, this topology is similar in many respects to the forward converters discussed previously. As a result of its push-pull operation it is capable of maximum duty ratios of approximately 95 percent as compared to a maximum duty ratio of 50 percent for the forward converter topology. For many applications it is more efficient use of transformers, inductors, and capacitors justifies its added complexity. With respect to the teaching of the present invention the summing network that produces the RAMP signal is functionally equivalent to Fig. 7, wherein diode D8 in Fig. 7 is replaced by zener VR1 and diodes D8 and D9 in Fig. 8.

Thus, the present invention has been described herein with reference to various embodiments for various applications. Those having ordinary skill in the art and access to the present teachings will recognize additional modifications applications and embodiments within the scope thereof.

It is therefore intended by the appended claims to cover any and all such applications, modifications and embodiments within the scope of the present invention.

## Claims

1. A switched mode power supply comprising:
pulse width modulator means for providing a switch activation signal in response to a slope compensation and voltage feed forward input signal;
transformer means for converting an input signal from a power supply to an output signal;
switch means for allowing current to flow in said transformer means in response to said switch activation signal and thereby converting said input signal to said output signal; and
means for generating said slope compensation and voltage feed forward input signal in proportion to said output signal and applying said signal to said pulse width modulator means.

2. The invention of Claim 1 wherein said pulse width modulator means includes means for generating an error signal in response to a feedback signal.

3. The invention of Claim 2 wherein said pulse width modulator means includes comparator means for comparing said slope compensation and voltage feed forward input signal with said error signal and regulating the duty cycle of said switch activation signal in response thereto.

4. The invention of Claim 3 wherein said transformer means includes a first transformer.

5. The invention of Claim 4 including a resistor connected in series with a primary winding of said transformer.

6. The invention of Claim 5 wherein said means for generating said slope compensation and voltage feed forward input signal in proportion to said output signal includes an inductor in series with a resistor connected across said transformer to provide said slope compensation and voltage feed forward signal from the node between said inductor and said resistor.

7. The invention of Claim 5 wherein said means for generating said slope compensation and voltage feed forward input signal in proportion to said output signal includes a resistor and a capacitor connected across said transformer to provide said slope compensation and voltage feed forward signal from the node between said resistor and said capacitor.

8. The invention of Claim 4 including a second transformer with the primary thereof connected to the primary of said first transformer and the secondary winding thereof connected to said comparator means.

9. The invention of Claim 8 wherein said means for generating said slope compensation and voltage feed forward input signal in proportion to said output signal includes an inductor connected from a winding of said first transformer to the secondary winding of said second transformer.

10. The invention of Claim 8 wherein said means for generating said slope compensation and voltage feed forward input signal in proportion to said output signal includes a resistor and a capacitor, said resistor being connected from a winding of said first transformer to the secondary winding of said second transformer and said capacitor being connected to said secondary winding of said second transformer.

11. A method for regulating energy from a power supply including the steps of:
providing a switch activation signal in response to a slope compensation and voltage feed forward input signal;
converting an input signal from said power supply to an output signal;
allowing current to flow in a transformer in response to said switch activation signal and thereby converting said input signal to said output signal; and
generating said slope compensation and voltage feed forward input signal in proportion to said output signal.
